# EUROPÄISCHE PATENTANMELDUNG

(11) **EP 4 434 727 A1**
(43) Veröffentlichungstag der Anmeldung: **25.09.2024**
(21) Anmeldenummer: 23163775.2
(22) Anmeldetag: 23.03.2023
(51) Int. Cl.: B29C 64/106, B29C 64/343, B29C 64/393, B33Y 10/00, B33Y 30/00, B33Y 50/02

(54) **VERFAHREN ZUR STEUERUNG EINES MATERIALVORSCHUBELEMENTS**

(71) Anmelder: Siemens Aktiengesellschaft, 80333 München (DE)
(72) Erfinder: Jähnicke, Jens, 09112 Chemnitz (DE)
(74) Vertreter: Siemens Patent Attorneys

(57) **Zusammenfassung**

Die Erfindung betrifft ein Verfahren zur Steuerung eines Materialvorschubelements (6, 6a) bei einer additiven Fertigung einer Schicht (32, 33, 34) oder eines Körpers (35), wobei der Körper vorzugsweise eine Mehrzahl an Schichten (32, 33, 34) aufweist, wobei durch Druck eines Materialvorschubelements (6, 6a) Material (7, 7a) in Richtung einer das Material (7, 7a) ausgebenden Düse (4, 4a) bewegt wird, wobei die Düse (4, 4a) mit einer Bahngeschwindigkeit über einen Arbeitstisch (2, 2a) bewegt wird, wobei der Druck dadurch aufgebracht wird, dass durch das Materialvorschubelement (6, 6a) eine Strecke (S, Sa) zurückgelegt wird, wobei die zurückzulegende Strecke (S, Sa) zum Aufbau des Drucks durch eine gewünschte Materialflussgeschwindigkeit und durch eine vorherige tatsächliche Materialflussgeschwindigkeit bestimmt wird.

## Beschreibung

Die Erfindung betrifft ein Verfahren zur Steuerung eines Materialvorschubs.

Bei additiven Fertigungsverfahren kann es bei einer Materialextrusion aufgrund von Geschwindigkeitsänderungen auf der Bahn zu Fehlern im Materialfluss kommen. Insbesondere durch Interpolation werden die beteiligten Achsen (insbesondere Bahn und Materialvorschub) mit zueinander passenden Sollwerten versorgt. Jedoch gibt es vom Materialvorschub bis zum Austritt des Materials aus einer Düse nicht-lineare Zusammenhänge, welche bisher nur unzureichend berücksichtigt wurden.

Der Erfindung liegt die Aufgabe zugrunde, die Materialextrusion dahingehend zu verbessern.

Die Lösung der Aufgabe gelingt durch Anspruch 1, d.h. ein Verfahren zur Steuerung eines Materialvorschubelements bei einer additiven Fertigung einer Schicht oder eines Körpers, wobei der Körper vorzugsweise eine Mehrzahl an Schichten aufweist, wobei durch Druck eines Materialvorschubelements Material in Richtung einer das Material ausgebenden Düse bewegt wird, wobei die Düse mit einer Bahngeschwindigkeit über einen Arbeitstisch bewegt wird, wobei der Druck dadurch aufgebracht wird, dass durch das Materialvorschubelement eine Strecke zurückgelegt wird, wobei die zurückzulegende Strecke zum Aufbau des Drucks durch eine gewünschte Materialflussgeschwindigkeit und durch eine vorherige tatsächliche Materialflussgeschwindigkeit bestimmt wird.

Die Materialflussgeschwindigkeit ist insbesondere für eine schichthöhe und Schichtbreite von Bedeutung.

Die Materialflussgeschwindigkeit sagt vorzugsweise aus, wie viel Material pro Zeiteinheit oder pro Wegeinheit auf der Bahn durch die Düse ausgegeben wird.

Vorteilhaft ist eine Ausführung, wonach die gewünschte Materialflussgeschwindigkeit mit einem Faktor multipliziert wird.

Durch den Faktor können vorteilhaft Fehler kompensiert werden, die durch reale Bedingungen, beispielsweise Trägheit einer Materialmasse, nicht-lineares Verhalten von mit Druck versehenen Materialien, Scherkräfte und/oder verzögertes Aufschmelzen von Material, herrühren.

Der Faktor basiert vorteilhaft auf Erfahrungswerten und ist vorteilhaft in der Steuerung hinterlegt.

Der Faktor kann für verschiedene Materialflussgeschwindigkeiten verschiedene Werte aufweisen. Dies wird in der Figurenbeschreibung gezeigt.

Vorteilhaft ist eine Ausführungsform, wonach der Faktor durch eine Differenz zwischen der gewünschten Materialflussgeschwindigkeit und der vorherigen tatsächlichen Materialflussgeschwindigkeit bestimmt wird.

Dies bedeutet beispielsweise: Wenn eine hohe Materialflussgeschwindigkeit vorliegt und diese auf eine andere Materialflussgeschwindigkeit reduziert werden soll, weil z. B. die Bahngeschwindigkeit der Düse reduziert wird, muss der Druck auf das Material verringert werden. Da sich diese Druckverringerung meist jedoch nicht sofort, sondern erst mit Verzögerung auswirkt, wird eine Differenz zwischen der hohen vorherigen Materialflussgeschwindigkeit und der jetzt gewünschten Materialflussgeschwindigkeit zur Bestimmung des Faktors herangezogen.

Vorteilhaft ist eine Ausführungsform, wonach die gewünschte Materialflussgeschwindigkeit mit der Bahngeschwindigkeit der Düse korreliert.

Dies ist vorteilhaft, da dadurch eine wenigstens im Wesentlichen gleichbleibende Schichtdicke und/oder Schichtbreite erreicht werden kann.

Denn wenn z.B. bei Kurven auf der Bahn gebremst wird bzw. die Bahngeschwindigkeit reduziert wird, soll auch weniger Material aus der Düse austreten.

Vorteilhaft ist eine Ausführungsform, wonach die zurückzulegende Strecke zusätzlich durch ein E-Modul des, vorzugsweise wenigstens teilweise aufgeschmolzenen, Materials bestimmt wird.

Das Material kann ganz oder teilweise aufgeschmolzen sein.

Wie später in der Figurenbeschreibung erläutert, weist eine vorteilhafte Vorrichtung zur Durchführung des Verfahrens eine Düse mit Heizelement auf. Wenn lange Zeit eine hohe Materialflussgeschwindigkeit vorliegt, kann das Heizelement unter Umständen nicht in gleichem Maße Material aufschmelzen. Auch dies kann durch das beschriebene Verfahren, insbesondere auf Basis von Erfahrungswerten, welche in einem Programm auf einer Steuerung hinterlegbar sind, kompensiert werden.

In anderen Worten bedeutet dies vorteilhaft: Bei einem hohen Materialvorschub wird meist das Schmelzereservoir kleiner. Der entstehende Druck hängt von der Vorgeschichte der aktuellen Größe des Schmelzereservoirs ab, was wiederum von der Geschwindigkeit abhängig ist.

Vorteilhaft ist eine Ausführungsform, wonach der Druck und die Materialflussgeschwindigkeit derart zusammenwirken, dass eine Schichthöhe und/oder eine Schichtbreite des durch die Düse ausgegebenen Materials während der additiven Fertigung wenigstens im Wesentlichen gleichbleibt.

Auf diese Weise können Körper mit mehreren Schichten zuverlässig gebildet werden.

Die Schichthöhe und/oder Schichtbreite sind vorteilhaft im G-Code hinterlegt zur Modifizierung einer Materialflusskorrektur.

Vorteilhaft ist eine Ausführungsform, wonach vor einer anstehenden Verringerung der Bahngeschwindigkeit, der Druck reduziert wird.

Durch die bereits erwähnte zeitliche Verzögerung ist eine gewisse Zeitspanne zwischen den beiden Schritten vorteilhaft.

Vorteilhaft ist eine Ausführungsform, wonach vor einer anstehenden Erhöhung der Bahngeschwindigkeit, der Druck erhöht wird.

Durch die bereits erwähnte zeitliche Verzögerung ist eine gewisse Zeitspanne zwischen den beiden Schritten vorteilhaft.

Vorteilhaft kann in Folgendes: Der Faktor zur Kompensation ist geschwindigkeitsabhängig. Querschnittsänderungen werden vorteilhaft berücksichtigt. Eine Dynamik des realen Materialflusses wird vorteilhaft berücksichtigt.

Die Lösung der Aufgabe gelingt ferner durch eine Vorrichtung zur Durchführung des Verfahrens.

Vorteilhaft weist eine derartige Vorrichtung wenigstens Folgendes auf:
- einen Arbeitstisch, ausgebildet zur Ablage von Material,
- eine Düse, ausgebildet zum Ausgeben von Material,
- ein Materialvorschubelement, ausgebildet dazu, Material in Richtung der das Material ausgebenden Düse zu bewegen,
- eine Steuerung, ausgebildet zur Steuerung des Materialvorschubelements.

Die Steuerung ist vorteilhaft auch zur Steuerung der Bahngeschwindigkeit ausgebildet bzw. allgemein zur Steuerung eines Weges der Düse.

Vorteilhaft weist die Düse ein Heizelement auf. Damit kann das Material aufgeschmolzen werden.

Die Lösung der Aufgabe gelingt ferner durch ein Computerprogrammprodukt, umfassend Befehle, die bei der Ausführung eines Programms durch einen Computer, insbesondere einer Steuerung, diesen veranlassen, das Verfahren auszuführen.

Das Programm ist vorteilhaft auf der Steuerung hinterlegt.

Im Folgenden wird die Erfindung anhand der in den Figuren dargestellten Ausführungsbeispiele näher beschrieben und erläutert. Es zeigen:
- FIG 1: eine beispielhafte Fertigungsvorrichtung zur Durchführung des Verfahrens,
- FIG 2: einen Vergleich von Aufdickungen,
- FIG 3: beispielhafte Kompensationswerte,
- FIG 4: einen beispielhaften Ablauf des Verfahrens,
- FIG 5: eine Aufdickung mit mehreren Schichten bzw. einen Körper,
- FIG 6: eine weitere mögliche Ausführungsform der Vorrichtung.

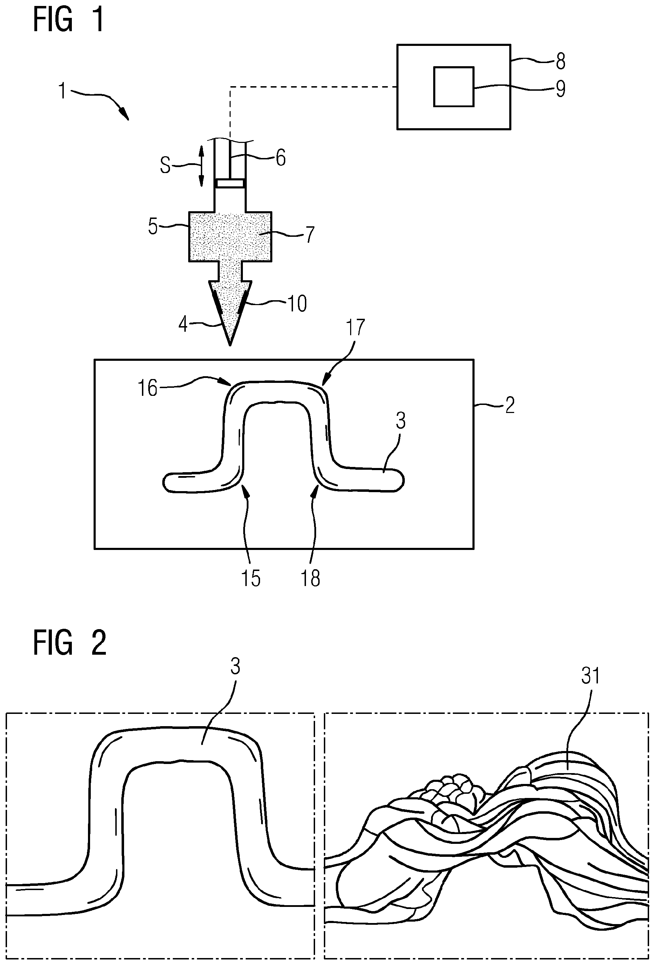

FIG 1 zeigt eine beispielhafte Fertigungsvorrichtung 1 zur Durchführung des Verfahrens.

Die Vorrichtung 1 umfasst einen Arbeitstisch 2, auf welchem eine Aufdickung 3 additiv aufgebracht wird.

Dies gelingt hierbei durch eine Düse 4 mit einem Reservoir 5. Mittels eines Materialvorschubelements 6 wird Material 7, welches vorteilhaft zumindest teilweise aufgeschmolzen ist, zur Bildung der Aufdickung 3 aufgebracht.

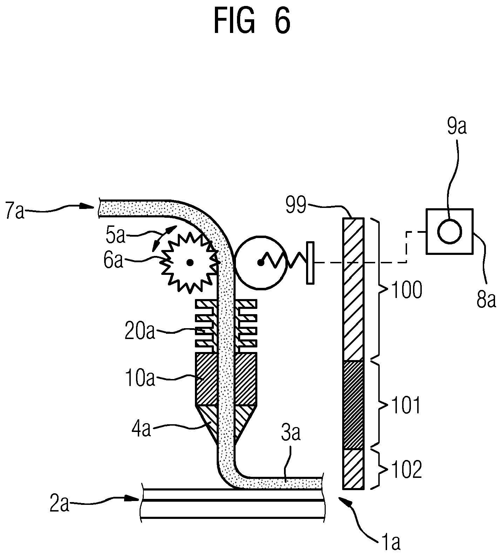

Das Materialvorschubelement 6 kann ein Stößel sein oder auch eine Extrudierschnecke. Auch andere Formen sind möglich, siehe auch in FIG 6.

Das Materialvorschubelement 6 übt vorteilhaft einen Druck auf das Material 7 aus.

Der Druck wird dadurch aufgebracht, dass durch das Materialvorschubelement eine Strecke S zurückgelegt wird.

Vorteilhaft dann, wenn in der Düse 4 ein gewisser Überdruck herrscht, tritt Material 7 aus der Düse 4 aus. Das Material 7 wird vorteilhaft durch Heizelemente 10 aufgeschmolzen.

Das Material ist vorzugsweise Kunststoff. Das Material kann auch z.B. Glas sein.

Vorteilhaft ist das Material ein komprimierbares Material.

Das Verfahren eignet sich besonders gut für zähflüssige Materialien, auch z.B. Klebstoffe oder Silikon.

Die Figur zeigt zudem eine Steuerung 8 sowie ein Computerprogrammprodukt 9, welches in der Figur auf der Steuerung 8 vorliegt und die Fertigungsvorrichtung 1 anweist.

FIG 2 zeigt einen Vergleich von Aufdickungen 3 und 31.

Links ist beispielhaft eine gedruckte Aufdickung 3 dargestellt, bei welcher eine Materialflussgeschwindigkeit geringer war als bei der rechts dargestellten Aufdickung 31. Insbesondere im Bereich der Ecken 15, 16, 17 und 18 wird eine Bahngeschwindigkeit, mit welcher die Düse 4 über den Arbeitstisch 2 verfahren wird, reduziert. Eine Schichthöhe und Schichtbreite der Aufdickung 3 soll jedoch vorteilhaft auch an diesen Stellen beibehalten werden. Um die Schichthöhe und Schichtbreite der Aufdickung 3 beizubehalten, wird vorteilhaft weniger Material aufgetragen, wenn die Bahngeschwindigkeit reduziert wird.

Wenn weniger Material aufgetragen werden soll, wird vorteilhaft eine Reduktion der Materialflussgeschwindigkeit herbeigeführt. Vorteilhaft korrelieren die Materialflussgeschwindigkeit und die Bahngeschwindigkeit. Es besteht vorteilhaft ein linearer Zusammenhang zwischen der Bahngeschwindigkeit und der Materialflussgeschwindigkeit.

Wie bereits erläutert, übt das Materialvorschubelement 6 vorteilhaft Druck auf das Material 7 aus, was vorteilhaft dazu führt, dass das Material 7 aus der Düse 4 austritt (vgl. FIG 1). Das Material 7 tritt dann vorteilhaft mit einer gewünschten Materialflussgeschwindigkeit aus. Die Düse 4 wird mit einer Bahngeschwindigkeit verfahren.

Wird die Bahngeschwindigkeit nun reduziert, wird vorteilhaft auch die Materialflussgeschwindigkeit reduziert. Dies gelingt vorteilhaft dadurch, dass der auf das Material 7 wirkende Druck reduziert oder weggenommen wird.

Diese Druckänderung wirkt sich in der Regel jedoch nicht sofort auf das aus der Düse 4 austretende Material 7 aus, sondern meist erst mit Verzögerung. Dies führt meist dazu, dass die Materialflussgeschwindigkeit nicht in dem gewünschten Maße reduziert wird und zu viel Material austritt. So kann die Schichthöhe und Schichtbreite der Aufdickung nicht beibehalten werden. Dies ist exemplarisch anhand der Aufdickung 31 gezeigt.

Das Materialvorschubelement 6 erzeugt vorteilhaft in Form eines Weges eine Materialbewegung bzw. einen Materialfluss. Das Material 7 wird vorteilhaft aufgeschmolzen. Abhängig vom E-Modul des nicht geschmolzenen und des geschmolzenen Materials 7 führt dieser Weg vorteilhaft zu einer Druckänderung in der Düse 4.

Das Material 7 ist beispielsweise Kunststoff, wobei entstehende Scherkräfte druckabhängig sind. Der Materialfluss hängt meist nicht linear vom Druck ab.

Vorzugsweise wird bei Änderung einer Materialflussgeschwindigkeit ein passender (vorzugsweise aus Erfahrungswerten gewonnener), geschwindigkeitsabhängiger Weg vorgesteuert, sozusagen ein Kompensationsweg bzw. ein Kompensationswert.

Dieser Kompensationswert ist vorzugsweise das mathematische Produkt aus der gewünschten Materialflussgeschwindigkeit und einem Faktor, wobei der Faktor von einer Differenz zwischen der jetzigen gewünschten Materialflussgeschwindigkeit und einer vorherigen tatsächlichen Materialflussgeschwindigkeit abhängig ist.

Der Kompensationswert kann z.B. ermittelt werden, indem bei Materialflussänderungen ein Materialvolumenfehler ermittelt wird und daraus der Kompensationswert für den Weg geschlussfolgert wird.

Da der Kompensationswert vorteilhaft materialflussgeschwindigkeitsabhängig ist, wird dies vorteilhaft für Geschwindigkeitsbereiche im vorzugsweise gesamten Arbeitsfeld durchgeführt.

Da ein Druck am Ausgang der Düse 4 im Druckprozess vorteilhaft dergestalt ist, dass die gewünschte Schichthöhe und Schichtbreite bzw. ein gewünschtes Verhältnis von Schichthöhe zu Schichtbreite eingehalten wird, sind diese Werte vorteilhaft in der Steuerung (besonders geeignet: G-Code) hinterlegt.

So können vorteilhaft vorher ermittelte Kompensationswerte im Prozess berücksichtigt werden.

Da die Kompensation vorteilhaft bedeutet, dass der Materialvorschub eine zu der Bewegung aus der Interpolation zusätzliche Bewegung machen muss, ist der reale Materialvorschub und die in der Interpolation berücksichtigte Materialvorschubachse vorzugsweise zu entkoppeln.

Für die in der Interpolation beteiligte Achse ist vorzugsweise eine virtuelle Achse zu benutzen, welche die Dynamik des realen Materialflusses berücksichtigt.

Die physisch vorhandene Achse wird vorzugsweise an die virtuelle Achse über Interpolationssollwerte und/oder einen Wegkompensationswert für eine Druckänderung aus einer Materialvorschubänderung und/oder einen Kompensationswert aus einer Querschnittsänderung und/oder weitere Kompensationswerte gekoppelt (z.B. Schneckenpositonskompensationswerte).

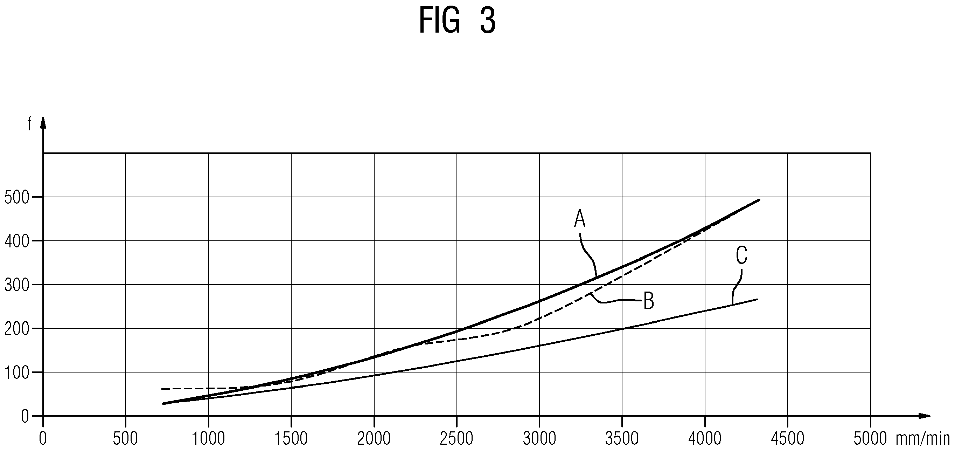

FIG 3 zeigt beispielhafte Kompensationswerte.

Die Abszisse zeigt die Materialflussgeschwindigkeit in mm/min auf. Die Ordinate zeigt einen Faktor f auf. Die Figur zeigt zudem die Kurven A, B und C.

A zeigt Variante 1, Polynom an die Messungen angenähert. B zeigt Messwerte für die Kompensation. C zeigt Variante 2, Polynom an die Messung angenähert.

Der Faktor resultiert vorteilhaft aus Erfahrungswerten bzw. aus vorangegangenen Versuchen. Die Figur zeigt in B die gemessenen geschwindigkeitsabhängigen Korrekturfaktoren und in A und C daraus abgeleitete Varianten zur Korrektur in Polynomform.

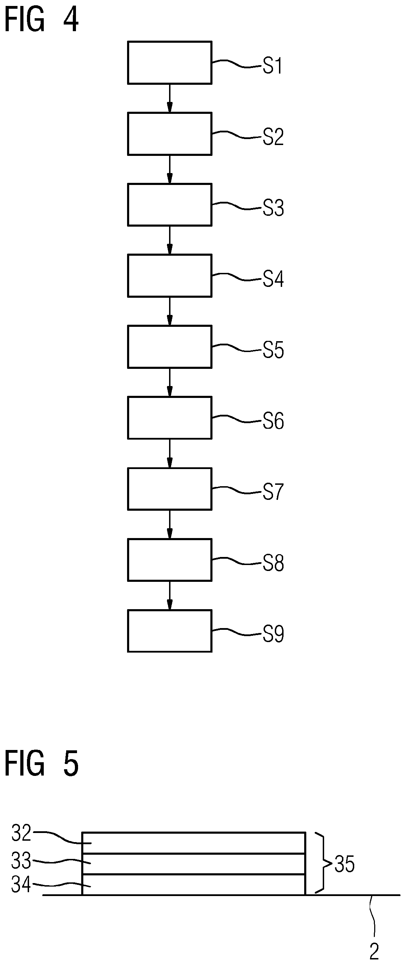

FIG 4 zeigt einen beispielhaften Ablauf des Verfahrens.

In einem Verfahrensschritt S1 wird Druck auf das Material aufgebaut, indem das Materialvorschubelement in Richtung der Düse bewegt wird und so eine Stecke zurücklegt.

Auf diese Weise wird das Material in Richtung der Düse bewegt und/oder vorteilhaft komprimiert. Das Material tritt vorteilhaft dann aus der Düse aus, wenn ein Druck in der Düse erreicht ist, der den Druck außerhalb der Düse übersteigt. Je nach gewünschter Schichthöhe und/oder Schichtbreite wird vorteilhaft diese Druckdifferenz angepasst. Vereinfacht dargestellt bedeutet dies: Je höher die Differenz zwischen dem Druck außerhalb der Düse und dem Druckinnerhalb der Düse ist, desto höher und/oder breiter wird die gedruckte Schicht (bzw. desto größer ist ein Querschnitt der Schicht).

In einem Verfahrensschritt S2 wird die Düse, vorteilhaft über den Arbeitstisch, mit einer Bahngeschwindigkeit auf einer, vorzugsweise in einem Programm auf der Steuerung vorliegenden, Bahn verfahren.

Die Bahn weist beispielhaft, vgl. FIG 1, eine Ecke oder Kurve 15 auf. Bevor die Düse an dieser kritischen Stelle angelangt ist, wird der Druck auf das Material in einem Verfahrensschritt S3 reduziert.

Auf diese Weise wird vorteilhaft eine Reduktion der Materialgeschwindigkeit erreicht.

In einem Verfahrensschritt S4 erfolgt ein Reduzieren der Bahngeschwindigkeit.

Die Reduktion des Drucks und die Reduktion der Bahngeschwindigkeit wirken vorteilhaft derart zusammen, dass die Höhe und Breite der gedruckten Schicht beibehalten werden.

In einem Verfahrensschritt S5 wird die Kurve bzw. Ecke 15 abgefahren.

In einem Verfahrensschritt S6 wird der Druck erhöht, da ein gerader Abschnitt 18, vgl. FIG 1, der Bahn folgt. In einem verfahrensschritt S7 wird die Bahngeschwindigkeit erhöht, vorteilhaft derart, dass die Höhe und Breite der gedruckten Schicht beibehalten werden.

Die Verfahrensschritte S3 bis S6 können je nach hinterlegter Bahn wiederholt werden.

Am Ende erfolgt vorteilhaft eine Reduktion des Drucks auf null (siehe Verfahrensschritt S8). In einem Verfahrensschritt S9 wird die Düse angehalten. FIG 5 zeigt eine Aufdickung mit mehreren Schichten 32, 33, 34 bzw. einen Körper 35. FIG 6 zeigt eine weitere mögliche Ausführungsform der Vorrichtung, in Form der Vorrichtung 1a.

Diese weist einen Arbeitstisch 2a, ausgebildet zur Ablage von Material auf. Das Material ist in dieser Ausführungsform ein Filament 7a.

Die Vorrichtung 1a weist eine Düse 4a auf, wobei die Düse 4a zum Ausgeben von Material ausgebildet ist. Die Vorrichtung weist in der Figur ein Materialvorschubelement 6a in Form eines Feeders, ausgebildet dazu, Material, also das Filament 7a, in Richtung der Düse 4a zu bewegen, auf und eine Steuerung 8a, ausgebildet zur Steuerung des Materialvorschubelements 6a.

Auf dem Arbeitstisch 2a wird eine Aufdickung 3a additiv aufgebracht wird.

Dies gelingt hierbei durch eine Düse 4a. Mittels des Materialvorschubelements 6a wird das Filament 7a, welches vorteilhaft zumindest teilweise aufgeschmolzen ist, zur Bildung der Aufdickung 3a aufgebracht.

Das Materialvorschubelement 6a übt vorteilhaft einen Druck auf das Filament 7a aus.

Der Druck wird dadurch aufgebracht, dass durch das Materialvorschubelement 6a eine Strecke Sa zurückgelegt wird. Dies gelingt in dieser Ausführungsform dadurch, dass eine Rotation bzw. Drehung vollzogen wird.

Das Material in Form des Filaments 7a wird vorteilhaft durch ein Heizelement 10a aufgeschmolzen und tritt vorteilhaft anschließend aus der Düse 4a aus.

Das Material ist vorzugsweise Kunststoff. Das Material kann auch z.B. Glas sein.

Die Figur zeigt zudem ein Element zur thermischen Entkoppelung 20a.

Die Figur zeigt zudem eine Steuerung 8a sowie ein Computerprogrammprodukt 9a, welches in der Figur auf der Steuerung 8a vorliegt und die Fertigungsvorrichtung 1a anweist.

Die Figur gibt zudem einen Eindruck über die Temperatur 99 des Filaments 7a. In einem Bereich 100 ist das Filament 7a noch relativ betrachtet kalt und beispielsweise fest.

Durch das Heizelement 10a findet eine Erwärmung des Filaments 7a statt. Das Filament ist in einem Bereich 101 vorzugsweise viskos.

Wenn das Filament nach Austritt aus der Düse 4a als Aufdickung 3a auf dem Arbeitstisch 2a aufliegt, ist dieses vorteilhaft in einem Bereich 102 wieder erkaltet und vorzugsweise fest.

## Patentansprüche

1. Verfahren zur Steuerung eines Materialvorschubelements (6, 6a) bei einer additiven Fertigung einer Schicht (32, 33, 34) oder eines Körpers (35), wobei der Körper vorzugsweise eine Mehrzahl an Schichten (32, 33, 34) aufweist, wobei durch Druck eines Materialvorschubelements (6, 6a) Material (7, 7a) in Richtung einer das Material (7, 7a) ausgebenden Düse (4, 4a) bewegt wird, wobei die Düse (4, 4a) mit einer Bahngeschwindigkeit über einen Arbeitstisch (2, 2a) bewegt wird, wobei der Druck dadurch aufgebracht wird, dass durch das Materialvorschubelement (6, 6a) eine Strecke (S, Sa) zurückgelegt wird, wobei die zurückzulegende Strecke (S, Sa) zum Aufbau des Drucks durch eine gewünschte Materialflussgeschwindigkeit und durch eine vorherige tatsächliche Materialflussgeschwindigkeit bestimmt wird.

2. Verfahren nach Anspruch 1, wobei die gewünschte Materialflussgeschwindigkeit mit einem Faktor (f) multipliziert wird.

3. Verfahren nach einem der vorhergehenden Ansprüche, wobei der Faktor durch eine Differenz zwischen der gewünschten Materialflussgeschwindigkeit und der vorherigen tatsächlichen Materialflussgeschwindigkeit bestimmt wird.

4. Verfahren nach einem der vorhergehenden Ansprüche, wobei die gewünschte Materialflussgeschwindigkeit mit der Bahngeschwindigkeit der Düse (4, 4a) korreliert.

5. Verfahren nach einem der vorhergehenden Ansprüche, wobei die zurückzulegende Strecke (S, Sa) zusätzlich durch ein E-Modul des, vorzugsweise wenigstens teilweise aufgeschmolzenen, Materials (7, 7a) bestimmt wird

6. Verfahren nach einem der vorhergehenden Ansprüche, wobei der Druck und die Materialflussgeschwindigkeit derart zusammenwirken, dass eine Schichthöhe und/oder eine Schichtbreite des durch die Düse (4, 4a) ausgegebenen Materials (7, 7a) während der additiven Fertigung wenigstens im Wesentlichen gleichbleibt.

7. Verfahren nach einem der vorhergehenden Ansprüche, wobei vor einer anstehenden Verringerung der Bahngeschwindigkeit, der Druck reduziert wird.

8. Verfahren nach einem der vorhergehenden Ansprüche, wobei vor einer anstehenden Erhöhung der Bahngeschwindigkeit, der Druck erhöht wird.

9. Verfahren nach einem der vorhergehenden Ansprüche, wobei eine Schichthöhe und/oder Schichtbreite im G-Code hinterlegt werden zur Modifizierung einer Materialflusskorrektur.

10. Vorrichtung (1, 1a) zur Durchführung des Verfahrens nach einem der Ansprüche 1 bis 9.

11. Vorrichtung (1, 1a) nach Anspruch 10, wenigstens aufweisend:
- einen Arbeitstisch (2, 2a), ausgebildet zur Ablage von Material (7, 7a),
- eine Düse (4, 4a), ausgebildet zum Ausgeben von Material (7, 7a),
- ein Materialvorschubelement (6, 6a), ausgebildet dazu, Material (7, 7a) in Richtung der Düse (4, 4a) zu bewegen,
- eine Steuerung (8, 8a), ausgebildet zur Steuerung des Materialvorschubelements (6, 6a).

12. Computerprogrammprodukt (9, 9a), umfassend Befehle, die bei der Ausführung eines Programms durch einen Computer, insbesondere einer Steuerung (8, 8a), diesen veranlassen, das Verfahren nach einem der Ansprüche 1 bis 9 auszuführen.
